# EUROPÄISCHE PATENTSCHRIFT

(11) **EP 2 198 353 B1**
(45) Veröffentlichungstag und Bekanntmachung des Hinweises auf die Patenterteilung: **07.09.2011**
(21) Anmeldenummer: 08839904.3
(22) Anmeldetag: 08.10.2008
(51) Int. Cl.: G05B 19/418

(54) **SYSTEM FÜR DIE PROZESSAUTOMATISIERUNG MIT EINER VIELZAHL VON INTELLIGENTEN SENSOREN UND EIN VERFAHREN ZUR KALIBRIERUNG DER SENSOREN**
SYSTEM FOR PROCESS AUTOMATION WITH A PLURALITY OF INTELLIGENT SENSORS AND METHOD FOR CALIBRATING THE SENSORS
SYSTÈME POUR L'AUTOMATISATION DE PROCESSUS COMPORTANT UNE PLURALITÉ DE DÉTECTEURS INTELLIGENTS ET PROCÉDÉ POUR ÉTALONNER LES DÉTECTEURS

(30) Priorität: 15.10.2007 DE 102007049523
(43) Veröffentlichungstag der Anmeldung: 23.06.2010
(73) Patentinhaber: Endress+Hauser Conducta Gesellschaft für Mess- und Regeltechnik mbH+Co. KG, 70839 Gerlingen (DE)
(72) Erfinder: BUSCHNAKOWSKI, Stephan, 09127 Chemnitz (DE); MIETH, Tobias, 01097 Dresden (DE); SCHEIBE, Sven-Matthias, 01129 Dresden (DE)
(74) Vertreter: Andres, Angelika Maria
(86) Internationale Anmeldenummer: PCT/EP2008/063472
(87) Internationale Veröffentlichungsnummer: WO 2009/050088

(56) Entgegenhaltungen:
- EP-A- 1 120 695
- EP-A- 1 120 696
- WO-A-00/77592
- WO-A-03/023541
- DE-A1- 4 413 836
- DE-A1- 10 218 606

## Beschreibung

Die Erfindung betrifft ein System für die Prozessautomatisierung mit einer Vielzahl von intelligenten Sensoren, sowie ein Verfahren zur Kalibrierung der intelligenten Sensoren, wobei jeder Sensor zur Bestimmung oder Überwachung einer physikalischen oder chemischen Prozessgröße eines Mediums dient. Übliche Feldgeräte setzen sich zusammen aus einem Sensorelement, das Messsignale liefert, die dem Wert einer zu bestimmenden oder zu überwachenden Prozessgröße entsprechen, und einem Transmitter, der die Messung des Sensors steuert und die von dem Sensor gelieferten Messsignale aufbereitet und auswertet.

Bei der physikalischen oder chemischen Prozessgröße kann es sich beispielsweise um den pH-Wert, die Leitfähigkeit, die Trübung, die Konzentration einer Komponente des Mediums, den Füllstand, den Druck, die Temperatur, die Dichte, die Viskosität oder den Volumen- oder Massefluss des Mediums handeln. Messgeräte, die zur Bestimmung der entsprechenden Prozessgrößen geeignet sind, werden von der Firmengruppe Endress+Hauser in großer Varianten-Vielfalt angeboten und vertrieben.

Aus der DE 102 18 606 A1 ist ein Feldgerät mit einem potentiometrischen Sensor, insbesondere einem pH-Sensor oder einem Redoxsensor, und einem Transmitter bekannt geworden, bei dem ein Teil der Intelligenz in Form eines Mikrocontrollers von dem Transmitter in den Sensor hineinverlagert ist. Der Mikrocontroller hat die Aufgabe, die Messwerte zu akquirieren, verschiedene relevante Parameter zu überwachen und mit dem Messumformer über die Schnittstelle zu kommunizieren. Der potentiometrische Sensor weist einen Elementarsensor bzw. ein Sensorelement auf, der den pH-Wert oder das Redox-Potentials eines Mediums erfasst, und eine Schnittstelle, über die ein von der potentiometrischen Größe abhängiges Messsignal an den mit dem Sensor verbundenen Messumformer übertragen wird. Mit dem Elementarsensor ist darüber hinaus ein digitaler Datenspeicher fest verbunden; in dem Datenspeicher sind sensorspezifische Daten, insbesondere Geräte-, Prozess- und Historiendaten gespeichert und somit untrennbar mit dem Sensor gekoppelt. Hierdurch es einerseits möglich, den Sensor vorzukalibrieren, bevor er am Einsatzort im Prozess für die jeweiligen Messzwecke eingesetzt wird; andererseits kann der Sensor problemlos an einen anderen Messumformer angeschlossen werden, ohne dass eine Neukalibrierung zwingend notwendig wird.

Der in der DE 102 18 606 A1 beschriebene Sensor besteht aus zwei lösbar miteinander verbundene Komponenten: dem Steckerkopf, mit dem der Elementarsensor und der Datenspeicher untrennbar verbunden sind, und der Steckverbinderkupplung oder dem Sensorkabel, über das der Sensor mit dem Messumformer gekoppelt ist. Der digitale bidirektionale Datentransfer zwischen dem Steckerkopf und der Steckverbinderkupplung erfolgt kontaktlos über die induktiv koppelnde Schnittstelle. Der Energietransfer über die kontaktlose, induktive Schnittstelle erfolgt vom Messumformer unidirektional zum Sensor. Entsprechende potentiometrische Sensoren werden von der Anmelderin unter der Bezeichnung MEMOSENS angeboten und vertrieben. Es bleibt festzuhalten, dass die Memosens-Technologie nicht nur für elektrochemische Sensoren anwendbar ist, sondern dass sie prinzipiell auf jedwede Sensoren zur Bestimmung und Überwachung der unterschiedlichsten Prozessgrößen anwendbar ist.

Aus der WO 00/077592 A2 ist ein Kontrollsystem mit intelligenten Feld- und Steuergeräten, bestehend aus Sensor und Transmitter, bekannt geworden, das eine virtuelle Maschinen-Umgebung zum Ausführen des Java-Bytecodes bereitstellt. Die Kommunikation erfolgt über Ethernet. Die Software zum Steuern der einzelnen Feld- und Steuergeräts ist in der virtuellen Maschine gespeichert.

Nachteilig bei der bekannten Lösung ist, dass ein großer Hardware-Aufwand für die Vorort-Steuerung der Feld- und Steuergeräte erforderlich ist. Die jeweilige Schnittstelle zur Steuerung des Feld- oder Steuergeräts ist direkt am Sensor vorgesehen, so dass der Einsatz eines Feldgeräts lokal auf die entsprechende Position innerhalb des Kontrollsystems beschränkt ist. Auch ist der WebServer, über den der Zugriff auf die Feld- und Kontrollgeräte erfolgt, direkt im System integriert. Weiterhin sind die einzelnen Feld- und Kontrollgeräte in einen Feldbus integriert; über einen Controller ist der Feldbus an das Ethernet angebunden.

Das bekannte System ist sehr aufwändig, da die Steuer-Software für jedes einzelne Feld- und Kontrollgerät in der virtuellen Maschine implementiert sein muss. Weiterhin ist der Einsatz der Sensoren, die zu den einzelnen Feld- und Kontrollgeräten gehören - wie bereits erwähnt - auf den Einsatz in einem definierten Feldbus beschränkt. Ein nachträglicher Wechsel des Netzwerks oder des Messumformers, wie er beispielsweise notwendig ist, wenn die Sensoren aus dem Prozess entfernt und im Labor kalibriert werden müssen, ist nicht möglich.
Aus der der EP 1 120 695 A2 ist ein Verfahren zur Erfassung, Übertragung und Speicherung von Schaltzuständen elektrischer Schaltgeräte und Signalquellen an einen mit einem Standardnetzwerk mit TCP/IP Protokoll verbundenen Computer bekannt geworden. Zur Erfassung und Interpretation der Signalpegel der elektrischen Schaltgeräte oder Signalquellen werden spreicherprogrammierbare Steuerungen (SPS) verschiedener Hersteller eingesetzt, welche zusätzlich zu den digitalen oder analogen Ein- und Ausgängen jeweils mit einer seriellen Schnittstelle ausgerüstet sind. Jede SPS ist so programmiert, dass sie die Pegel der Signaleingänge zyklisch abfragt und den jeweils erfassten Wert in einen logischen Wert umwandelt. Daraufhin wird der logische Wert in einem dem jeweiligen Eingang zugeordneten Adressbereich abgespeichert. Der gespeicherte Wert wird z.B. von der SPS sofort in eine Zeichenkette umgewandelt, welche den Namen der SPS, den meldenden Eingang und den Wert enthält. Alternativ wird der Wert mit einem bereits abgespeicherten Wert verglichen und die Zeichenkette wird nur bei einer Überschreitung eines zuvor festgelegten Deltas generiert. Die generierte Zeichenkette wird über die Schnittstelle der SPS ausgegeben.
Die serielle Schnittstelle einer jeden SPS ist über eine Datenleitung mit der seriellen Schnittstelle eines Terminalservers verbunden, welcher die Aufgabe hat, die eintreffenden Zeichenkette in ein TCP/IP Datenpaket zu verpacken. Mit dem Terminalserver können bis zu 64 SPS verbunden sein. Dem Datenpaket wird im Terminalserver die IP Adresse des Absenders (SPS) und des Leitrechners beigefügt.
Das Gerätetreiberprogramm am Leitrechner entpackt das TCP/IP Datenpaket wieder in eine Zeichenkette, fügt diesem Datum und Uhrzeit hinzu und schreibt diese Information in den einer zuvor definierten virtuellen seriellen Schnittstelle zugeordneten Speicherpuffer. Die Informationen können mit jeder Anwendung, welche auf seriell empfangene Daten zugreifen kann, weiterverarbeitet werden.
Aus der EP 1 120 696 A1 (D2) ist ein analoges Verfahren zur Datenübertragung von und zu CNC gesteuerten Maschinensteuerungen bekannt geworden.

Der Erfindung liegt die Aufgabe zugrunde, ein System aus einer Vielzahl von intelligenten Sensoren und ein Verfahren zur Kalibrierung der intelligenten Sensoren vorzuschlagen, bei dem über bestehende Kommunikationssysteme auf die Sensoren global zugegriffen werden kann. Insbesondere sollen die Daten der Sensoren, gleichgültig ob die Sensoren sich im Messbetrieb im Prozess oder zu Kalibrierzwecken im Labor befinden, ohne zusätzlichen Aufwand global zur Verfügung stehen.

Die Aufgabe wird dadurch gelöst, dass jeder intelligente Sensor jeweils ein primärseitiges Steckverbinderelement und ein sekundärseitiges Steckverbinderelement mit einem Sensorelement aufweist, wobei die Energieversorgung und der Datenkommunikation zwischen den beiden Steckverbinderelementen über eine lösbare Steckverbinderkupplung erfolgen. Weiterhin ist jedem Sensor eine Webservice-Schnittstelle zugeordnet, über die der Sensor an ein beliebiges Anwendernetz, sei dies ein Weitverkehrs-Anwendernetz WAN oder an ein Lokales Anwendernetze LAN, anschließbar ist. Zusätzlich ist eine Kontrolleinheit oder ein Server vorgesehen, die / der zumindest eine Software zum Generieren eines virtuellen Messumformers bereitstellt, wobei die Kommunikation zwischen dem virtuellen Messumformer und den Sensoren über die Webservice-Schnittstelle erfolgt. Der bislang notwendige physische Messumformer wird bei der erfindungsgemäßen Lösung eingespart. Unter Webservice-Schnittstelle wird einmal eine Schnittstelle verstanden, die dem Zugriff auf den virtuellen Messumformer dient. Es ist jedoch auch möglich, eine herstellerunabhängige Webservice-Schnittstelle am Sensor zu implementieren, um so ein offenes System zu schaffen.

Bei den Sensoren handelt es sich bevorzugt um elektrochemische Sensoren, jedoch können erfindungsgemäß alle möglichen Typen von Sensoren in das erfindungsgemäßen System integriert werden. Als WAN Anwendernetz kommt bevorzugt das Internet zum Einsatz, als lokales Anwendernetz kommt z.B. ein Fast-Ethernet zum Einsatz, das eine schnelle implementierung des Ethernet-Standards ermöglicht.

Durch die erfindungsgemäße Lösung ist es möglich, Sensoren global verfügbar und den Zugriff auf die Sensoren somit unabhängig davon zu machen, ob sie in einem firmeninternen LAN-Netzwerk oder in einem WAN-Netzwerk, über einen PC oder auch über einen herkömmlichen Messumformer adressiert werden. Über die Webservice-Schnittstellle und die zugeordnete IP-Adresse sind die Sensoren z.B. zu Kalibrations- oder Abfragezwecken direkt adressierbar und ansprechbar.

Erfindungsgemäß sind sowohl Sensoren mit Memosens-Schnittstelle als auch Sensoren mit galvanisch koppelnder Schnittstelle direkt mit einem beliebigen Netzwerk verbindbar; der Zugriff auf die einzelnen Sensoren erfolgt über Ethernet und zwar bevorzugt über den Webbrowser des Anwenders. Die Übertragungsrate für die Daten kann ohne Weiteres bis 1 Gbit/sec betragen.

Erfindungsgemäß sind die Sensordaten über Internet verfügbar. Weiterhin ist nur noch ein Software-Messumformer, ein sog. virtueller Messumformer notwendig, was die Herstellungskosten erheblich reduziert. Der virtuelle Messumformer, der u.a. die Steuerung des Sensors realisiert, kann an einem beliebigen Ort installiert werden. Einzige Voraussetzung ist, dass an diesem Ort eine Netzwerkanbindung besteht. Ein weiterer Vorteil des erfindungs-gemäßen Systems ist darin zu sehen, dass aufgrund der fehlenden physischen Messumformer die Laboraufbauten erheblich vereinfacht werden. Eine erhebliche Vereinfachung stellt es auch dar, dass bestehende Netzwerkinfrastrukturen für das erfindungsgemäße System genutzt werden können.

Damit das System vor anonymen, nicht autorisierten Zugriffen geschützt ist, müssen sich ein Benutzer zunächst am System anmelden. Angemeldete Benutzer haben je nach Zugriffsberechtigung die Möglichkeit, zwischen lesenden und/oder schreibenden Zugriffen zu wählen. Nachdem ein Benutzer auf die gewünschte Seite navigiert ist, kann er aus einer Liste der verfügbaren Sensoren den gewünschten Sensor auswählen. Anschließend werden dem Benutzer die Messwerte des ausgewählten Sensors oder andere verfügbare Sensordaten angezeigt. Der Austausch von Sensoren im laufenden Messbetrieb, insbesondere zu Kalibrationszwecken, wird erheblich erleichtert. Ebenso können defekte Sensoren im laufenden Betrieb durch funktions-tüchtige Sensoren ersetzt werden.

Als besonders vorteilhaft wird es angesehen, wenn die Webservice-Schnittstelle in das sekundärseitige Steckverbinderelement integriert ist. Eine vorteilhafte Weiterbildung des erfindungsgemäßen Systems schlägt vor, dass die Webservice-Schnittstelle am Steckverbinderelement über eine zugeordnete Webadresse automatisch eindeutig ansprechbar ist. Bei der Webservice-Schnittstelle handelt es sich bevorzugt um eine serielle Schnittstelle zur Anbindung an das Weitverkehrs-Anwendernetz WAN oder ein das Lokales Anwendernetze LAN. Eine alternative Ausgestaltung schlägt vor, dass anstelle der integrierten Webservice-Schnittstelle ein Gateway bzw. ein Protokollumsetzer zum jeweiligen Netwerk vorgesehen ist.

Als Kontrolleinheit kommt bevorzugt ein PC, ein Handheld, ein Smartphone mit Internet Browser oder ein Telefon zum Einsatz, das sich eines entsprechenden Servers bedient. Der virtuelle Messumformer stellt die jeweils geeignete Schnittstelle zu Verfügung.

Wie bereits an vorhergehender Stelle erwähnt, wird es als besonders vorteilhaft erachtet, wenn jeweils in dem sekundären Steckverbinderelement ein Datenspeicher vorgesehen ist, in dem sensorspezifische Daten, insbesondere Daten zur Identifikation, zur Parametrierung bzw. Kalibrierung, und ggf. die zuletzt gemessenen Messdaten enthalten sind. Diese Daten sind dem zugehörigen Sensor fest zugeordnet. Hier ist also bereits ein Teil der Intelligenz vom nur noch virtuell existierenden Messumformer in den Sensor verlagert.

Gemäß einer bevorzugten Ausgestaltung des erfindungsgemäßen Systems ist eine Eingabeeinheit vorgesehen, über die der Benutzer direkt auf den virtuellen Messumformer zugreifen kann. Bei der Eingabeeinheit handelt es sich um einen Webserver, welcher über einen Web-Browser ansprechbar ist.

Das erfindungsgemäße Verfahren zum Kalibrieren der Sensoren des Systems, das in einem oder mehreren der Ansprüche 1-10 beschreiben ist, umfasst die folgenden Verfahrensschritte:
- einer oder mehrere der Sensoren werden zu Wartungs- und/oder Kalibrierzwecken aus dem über ein erstes Netzwerk verbundenen System entnommen und im Labor mit einem Labor-Netzwerk verbunden;
- über die Webadresse wird der Sensor im Netzwerk adressiert, und es wird ein automatischer Abgleich der Kalibrierdaten des Sensors mit den im virtuellen Messumformer gespeicherten Daten durchgeführt;
- anschließend werden die Sensoren vom Nutzer über die Webservice-Schnittstellen kalibriert;
- die kalibrierten Sensoren werden aus dem Labor-Netzwerk entnommen und nach erfolgter Kalibrierung wieder in das System und das erste Netzwerk integriert, wobei die Kalibrierdaten ggf. im Datenspeicher, der dem sekundären Steckverbinderelement zugeordnet ist, gespeichert werden.

Gemäß einer vorteilhaften Weiterbildung des erfindungsgemäßen Verfahrens werden die in dem Datenspeicher des sekundärseitigen Steckverbinder-elements gespeicherten sensorspezifischen IST-Daten in einer firmeninterne Datenbank erfasst und mit abgespeicherten SOLL-Daten verglichen.

Darüber hinaus ist vorgesehen, dass im Falle einer über einen vorgegebenen Toleranzbereich hinausgehenden Abweichung zwischen den IST-Daten und den SOLL-Daten eine Warn- oder Fehlermeldung generiert und ausgegeben wird.

Zusätzlich wird vorgeschlagen, dass im Falle einer Fehlermeldung ein neuer Sensor mittels einer SAP-Anbindung über eine entsprechende Schnittstelle API 'Application Programming Interface' des virtuellen Messumformers geordert wird. Der virtuelle Messumformder stellt eine Anwendungsschnitt-stelle bereit, über die sich beliebige Anwendungen an das System anbinden lassen. Die Schnitttelle PI kann über verschiedene physische Schnittstellen genutzt werden.

Die Erfindung wird anhand der nachfolgenden Figuren näher erläutert. Es zeigt:
Fig. 1: eine schematische Darstellung einer ersten Ausführungsform des erfindungsgemäßen Systems,
Fig. 2: eine schematische Darstellung einer zweiten Ausführungsform des erfindungsgemäßen Systems und
Fig. 3: eine Darstellung, wie der Zugriff auf die Sensoren im erfindungs-gemäßen System erfolgt.

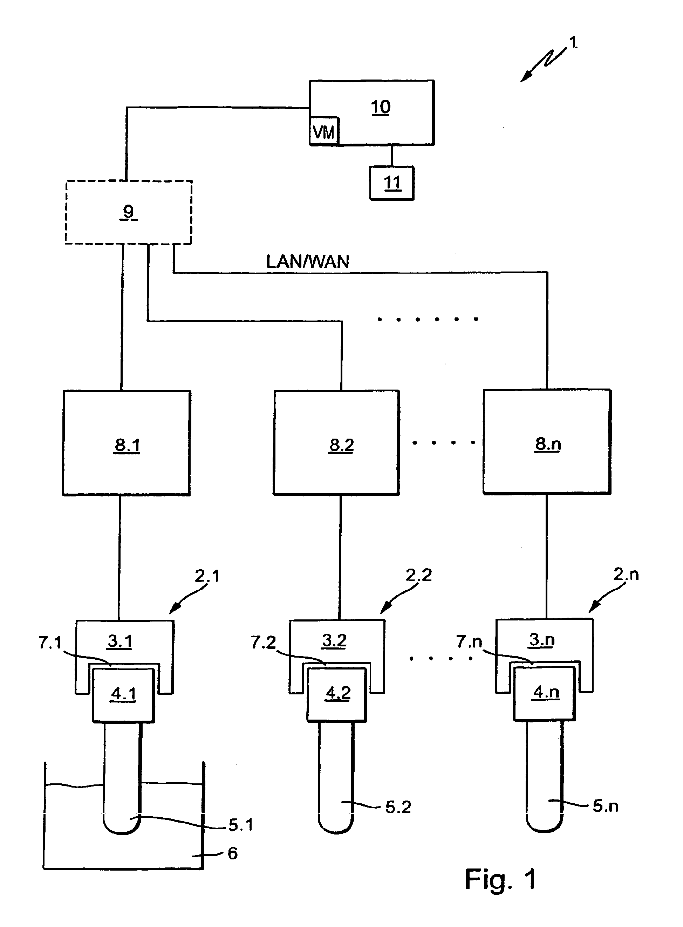

Fig. 1 zeigt eine schematische Darstellung einer ersten Ausführungsform des erfindungsgemäßen Systems 1, in das n Sensoren 2.1 ... 2.n integriert sind. Bei den Sensoren 2.1 ... 2.n handelt es sich um Sensoren 2.1 ... 2.n, die mit der Memosens-Technologie ausgestattet sind: Ein primärseitiges Steckverbinderelement 3.1 .... 3.n bzw. ein Sensorkabel ist mit einem sekundärseitigen Steckverbinderelement 4.1 ... 4.n bzw. dem Steckkopf mit integriertem Sensorelement 5.1 ... 5. n über eine Steckverbinderkupplung 7.1 ... 7.n lösbar gekoppelt. Bevorzugt handelt es sich bei der Steckverbinder-kupplung 7.1 ... 7.n um eine galvanisch getrennte Schnittstelle, die so ausgestaltet ist, dass sie die Kommunikation in beiden Richtungen und die Energieübertragung vom primärseitigen Steckverbinderelement 3.1 .... 3.n zum sekundärseitigen Steckverbinderelement 4.1 ... 4.n unidirektional gestattet. Es versteht sich von selbst, dass die Steckverbinderkupplung 7.1 7.n durchaus auch als galvanische Schnittstelle ausgestaltet sein kann. Verwiesen wird in diesem Zusammenhang auf einen digitalen Sensor, der unter der Bezeichnung INDUCON angeboten wird. Das Sensorelement 5.1 ... 5.n ist so gewählt, dass es optimal auf die zu bestimmende oder zu überwachende Prozessgrößen abgestimmt. Von der Firmengruppe Endress+Hauser werden eine Vielzahl von Sensoren zur Bestimmung der unterschiedlichsten physikalischen und chemischen Prozessgrößen angeboten.

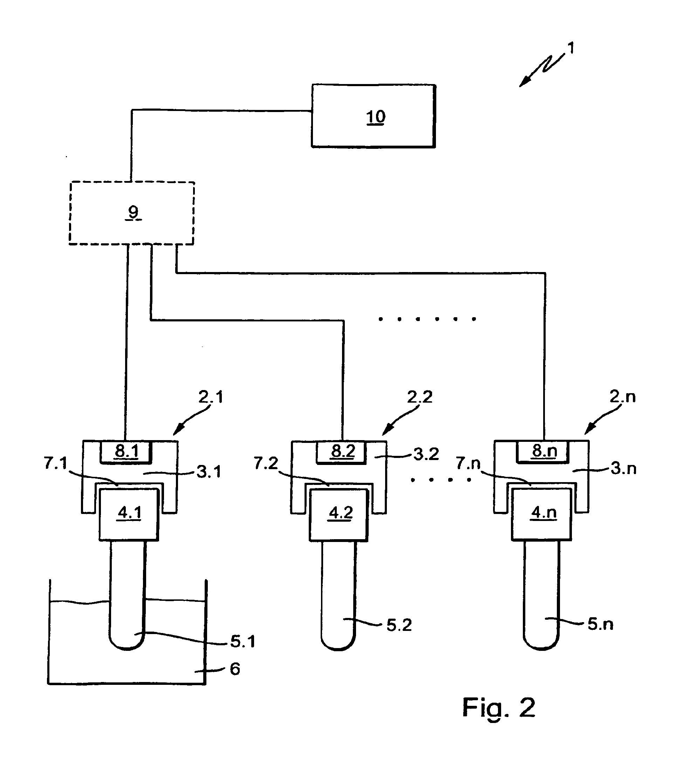

Jedem der Sensoren 2.1 ... 2.n ist eine Webservice-Schnittstelle 8.1 ... 8.n zugeordnet. Während bei der in Fig. 1 gezeigten Ausgestaltung des Systems 1 die Webservice-Schnittstelle 8.1 ... 8.n von dem Sensor 2.1 ... 2.n abgesetzt ist, ist sie bei der in Fig. 2 gezeigten Ausgestaltung in das primärseitige Steckverbinderelment 3.1 ... 3.n integriert.

Über die Kontrolleinheit 10 und den Hub 9 werden wird ein ausgewählter Sensor 2.1; ... 2.n via LAN adressiert und die Sensordaten werden ausgelesen oder in den Sensor 2.1 ... 2.n geschrieben. Hierzu dient die Eingabeeinheit 11. In der Kontrolleinheit 10 ist der virtuelle Messumformer VM implementiert, der die Steuerung aller Sensoren 2.1 .... 2.n und die Aufbereitung und Auswertung der Sensordaten übernimmt, soweit dies nicht schon der Mikorcontroller übernommen hat, der in dem sekundärseitigen Steckverbinderelement 3.1 .... 3.n integriert ist.

Die Sensoren 2.1 .... 2.n sind in einem Anwendernetzwerk LAN integriert und werden von dem virtuellen Messumformer VM, der in der Kontrolleinheit 10 - hier einem PC - integriert ist, gesteuert. Um den Zugriff auf jeden einzelnen Sensor 2.1 ... 2.n zu ermöglichen, weist jeder Sensor 2.1 ... 2.n eine Webservice-Schnittstelle 8.1 .... 8.n auf. Über diese Webservice-Schnittstelle 8.1 ... 8.n kann der Sensor 2.1 ... 2.n an ein beliebiges WAN oder LAN-Anwendernetz angeschlossen werden. Bei dem LAN-Anwendernetz handelt es sich im gezeigten Fall um das Ethernet, bei dem WAN-Anwendernetz um das Internet.

Der virtuelle Messumformer VM führt alle Funktionen aus, die bislang der jedem einzelnen Sensor 2.1 ... 2.n oder einer beschränkten Gruppe von Sensoren 2.1 ... 2.n zugeordnete Messumformer ausgeführt hat. Erfindungs-gemäß werden diese physischen Messumformer eingespart. Gleichgültig ist es auch, in welchem Netzwerk die einzelnen Sensoren 2.1 ... 2.n integriert sind, da jeder Sensor 2.1 ... 2.n über seine IP-Adresse eindeutig identifizier- und adressierbar ist. Die erfindungsgemäße Lösung ermöglicht es, die Sensoren 2.1 ... 2.n in jedes beliebige Netzwerk LAN WAN über die Webservice-Schnittstetle 8.1 ... 8.n zu integrieren.

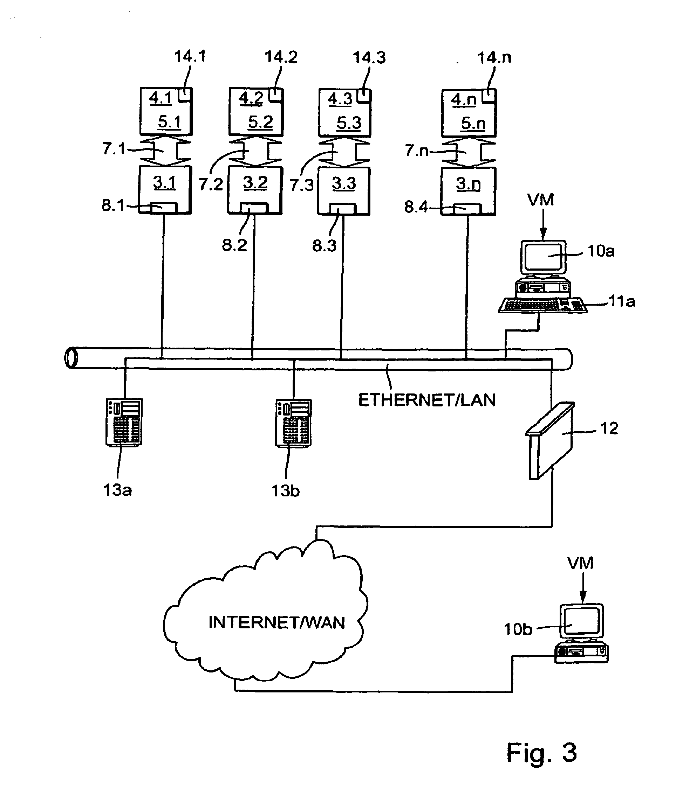

Wie in Fig. 3 skizziert ist, ist es möglich, über das Internet (WAN)und das Ethernet (LAN) global auf die Sensoren 2.1' ... 2.n zuzugreifen. Um das firmeninterne Anwendernetzwerk LAN gegen nicht autorisierte Zugriffe zu schützen, ist eine Zugriffsberechtigung 12 der Benutzer für Lese- und/oder Schreibzugriffe erforderlich. Nur wenn ein Nutzer seine Autorisierung nachweist, kann er auf die Sensoren 2.1 ... 2.n zugreifen. Verschiedene Sicherheitsmechanismen für den globalen Zugriff auf Daten eines Feldgeräts sind in der WO 03/023541 A2 beschrieben.

Da die Sensoren 2.1 ... 2.n in jedes beliebige Netzwerk LAN, WAN integrierbar sind, wird die Kalibrierung der Sensoren 2.1 ... 2.n, die üblicherweise nicht vor Ort im Prozess sondern im Labor erfolgt, erheblich vereinfacht. Ein im Labor an ein Netzwerk LAN angeschlossener Sensor 2.1 .... 2.n kann sofort nach Integration in das Netzwerk LAN im Prozess über den in der Kontrolleinheit 10a, 10b integrierten virtuellen Messumformer VM kalibriert werden, wobei die Kalibrierdaten im Datenspeicher 14.1 ... 14.n des Sensors 2.1 .. 2.n gespeichert werden. Wird der kalibrierte Sensor 2.1 ... 2.n nachfolgend wieder im Prozess eingesetzt, kann er über die Webservice-Schnittstelle 8.1 ... 8.n sowohl über das LAN als auch über das WAN direkt auf den Sensor 2.1 ... 2.n zugegriffen werden.

Bei der Kontrolleinheit 10 kann es sich um einen PC 10a, ein Handheld 13a, ein Smartphone mit Internet Browser oder ein Telefon 13b zum Einsatz, das sich eines entsprechenden Servers bedient.

**Bezugszeichenliste**
- 1: erfindungsgemäßes System
- 2.1 ... 2.n: Sensor
- 3.1 ...3.n: primärseitiges Steckverbinderelement
- 4.1 ...4.n: sekundärseitiges Steckverbinderelement
- 5.1 ... 5.n: Sensorelement
- 6: Medium
- 7.1 ...7.n: Steckverbinderkupplung
- 8.1 ...8.n: Webservice-Schnittstelle
- 9: Schalter / Hub
- 10: Kontrolleinheit
- 11: Eingabeeinheit
- 12: Zugriffsschutz
- 13a: Handheld
- 13b: Smartphone

## Patentansprüche

1. System für die Prozessautomatisierung mit einer Vielzahl von intelligenten Sensoren (2.1 ... 2.n), wobei jeder Sensor (2.1 ... 2.n) zur Bestimmung oder Überwachung einer physikalischen oder chemischen Prozessgröße eines Mediums (6) dient und jeweils ein primärseitiges Steckverbinderelement (3.1 ... 3.n) und ein sekundärseitiges Steckverbinderelement (4.1 ... 4.n) mit einem Sensorelement aufweist, wobei die Energieversorgung und der Datenkommunikation zwischen den beiden Steckverbinderelementen (3.1 ... 3.n; 4.1 ... 4.n) über eine lösbare Steckverbinderkupplung (7.1 ... 7.n) erfolgt, wobei jedem Sensor (2.1 ... 2.n) eine Webservice-Schnittstelle (8.1 ... 8.n) zugeordnet ist, über die der Sensor (2.1 ... 2.n) an ein Weitverkehrs-Anwendernetz (WAN) oder an ein Lokales Anwendernetze (LAN) anschließbar ist,
wobei eine Kontrolleinheit (10) oder ein Server vorgesehen ist, die / der zumindest eine Software zum Generieren eines virtuellen Messumformers (VM) bereitstellt, und
wobei die Kommunikation zwischen dem virtuellen Messumformer (VM) und den Sensoren (2.1 ... 2.n) über die Webservice-Schnittstelle (8.1 ... 8.n) erfolgt.

2. System nach Anspruch 1,
wobei die Webservice-Schnittstelle (8.1 ... 8.n) in das primärseitige Steckverbinderelement (3.1 ... 3.n) integriert ist.

3. System nach Anspruch 1 oder 2,
wobei die Webservice-Schnittstelle (8.1 ... 8.n) am primärseitigen Steckverbinderelement (3.1 ... 3.n) über eine zugeordnete Webadresse (IP) automatisch eindeutig ansprechbar ist.

4. System nach Anspruch 1, wobei es sich bei der Kontrolleinheit (10) beispielsweise um einen PC (10a), ein Handheld (13a), ein Smartphone (13b) mit Internet Browser oder über ein Telefon mit Hilfe eines Servers handelt.

5. System nach Anspruch 1,
wobei es sich bei den Sensoren (2.1 ... 2.n) um elektrochemische Sensoren handelt.

6. System nach Anspruch 1, wobei es sich bei der Steckverbinderkupplung (7.1 ... 7.n) um eine galvanische oder eine galvanisch getrennte, insbesondere eine induktive Schnittstelle handelt.

7. System nach Anspruch 1, wobei in jedem sekundären Steckverbinderelement (4.1 ... 4.n) ein Datenspeicher (14.1 ... 14.n) vorgesehen ist, in dem sensorspezifische Daten, insbesondere Daten zur Identifikation, zur Parametrierung bzw. Kalibrierung, und ggf. die zuletzt gemessenen Messdaten enthalten sind.

8. System nach Anspruch 1 oder 3, wobei es sich bei der Webservice-Schnittstelle (8.1 ... 8.n) um eine serielle Schnittstelle zur Anbindung an das Weitverkehrs-Anwendernetz (WAN) oder an das Lokale Anwendernetze (LAN) handelt.

9. System nach einem oder mehreren der vorhergehenden Ansprüche,
wobei eine Eingabeeinheit (11) vorgesehen ist, über die ein Nutzer direkt auf den virtuellen Messumformer (VM) zugreift.

10. System nach einem oder mehreren der vorhergehenden Ansprüche, wobei es sich bei der Eingabeeinheit (11) um einen Webserver handelt, welcher über einen Web-Browser ansprechbar ist.

11. Verfahren zum Kalibrieren der Sensoren eines Systems (1) nach einem oder mehreren der Ansprüche 1-10,
wobei einer oder mehrere der Sensoren (2.1 ... 2.n) zu Wartungs- und Kalibrierzwecken aus dem über ein erstes Netzwerk (LAN) verbundenes System (1) entnommen werden und im Labor mit einem Labor-Netzwerk (LAN) verbunden werden,
wobei über die Webadresse (IP) jeweils der entsprechende Sensor (2.1 ... 2.n) adressiert wird und wobei ein automatischer Abgleich der Kalibrierdaten des Sensors (2.1 ... 2.n) mit den im virtuellen Messumformer (VM) gespeicherten Daten erfolgt,
wobei die Sensoren (2.1 ... 2.n) vom Nutze über die Webservice-Schnittstelle (8.1 ... 8.n) kalibriert werden, und
wobei die kalibrierten Sensoren (2.1 ... 2.n) aus dem Labor-Netzwerk entnommen und nach erfolgter Kalibrierung wieder in das System (1) integriert werden.

12. Verfahren nach Anspruch 11,
wobei die in dem Datenspeicher des sekundärseitigen Steckverbinder-elements (4.1 ... 4.n) gespeicherten sensorspezifischen IST-Daten in einer firmeninterne Datenbank erfasst und mit abgespeicherten SOLL-Daten verglichen werden.

13. Verfahren nach Anspruch 12, wobei die im Falle einer über einen vorgegebenen Toleranzbereich hinausgehenden Abweichung eine Fehlermeldung ausgegeben wird.

14. Verfahren nach Anspruch 13,
wobei im Falle einer Fehlermeldung ein neuer Sensor mittels einer SAP-Anbindung über eine entsprechende Schnittstelle API des virtuellen Messumformers (VM) geordert wird.

## Claims

1. System for process automation with a multitude of smart sensors (2.1...2.n), where each sensor (2.1....2.n) serves to measure or monitor a physical or chemical process variable of a medium (6) and has a primary plug connector element (3.1...3.n) and a secondary plug connector element (4.1....4.n) with a sensor element, where the power is supplied and data is communicated between the two plug connector elements (3.1...3.n; 4.1...4.n) via a non-permanent plug connector coupling (7.1...7.n), where every sensor (2.1....2.n) is assigned a web service interface (8.1....8.n) via which the sensor (2.1....2.n) can be connected to a wide-area network (WAN) or a local area network (LAN),
where a control unit (10) or a server is provided that provides at least one software application to generate a virtual transmitter (VM) and
where the communication between the virtual transmitter (VM) and the sensors (2.1....2.n) takes place via the web service interface (8.1....8.n).

2. System as per Claim 1,
where the web service interface (8.1....8.n) is integrated into the primary plug connector element (3.1....3.n).

3. System as per Claim 1 or 2,
where the web service interface (8.1....8.n) at the primary plug connector element (3.1....3.n) can be automatically and uniquely addressed via an assigned web address (IP).

4. System as per Claim 1,
where the control unit (10) is, for example, a PC (10a), a handheld terminal (13a), a smart phone (13b) with an Internet browser or a telephone with the help of a server.

5. System as per Claim 1,
where the sensors (2.1....2.n) are electrochemical sensors.

6. System as per Claim 1,
where the plug connector coupling (7.1...7.n) is a galvanic or galvanically isolated interface, particularly an inductive interface.

7. System as per Claim 1,
where each secondary plug connector element (4.1...4.n) has a data memory (14.1...14.n) that contains sensor-specific data, particularly data for identification, configuration or calibration purposes, and, where applicable, the last set of measured data.

8. System as per Claim 1 or 3,
where the web service interface (8.1...8.n) is a serial interface to connect to the wide-area network (WAN) or local area network (LAN).

9. System as per one or more of the previous claims,
where an input unit (11) is provided via which the user directly accesses the virtual transmitter (VM).

10. System as per one or more of the previous claims,
where the input unit (11) is a web server that can be accessed via a web browser.

11. Method for calibrating the sensors of a system (1) as per one or more of the Claims 1-10, where one or more of the sensors (2.1...2.n) are removed - for maintenance and calibration purposes - from the system, which is connected via a first network (LAN), and are connected in the laboratory with a laboratory network (LAN),
where the corresponding sensor (2.1...2n) is addressed via the web address (IP) and where the calibration data of the sensor (2.1...2.n) are automatically verified against the data saved in the virtual transmitter (VM),
where the sensors (2.1...2.n) are calibrated by the user via the web service interface (8.1...8.n), and where the calibrated sensors (2.1...2.n) are removed from the laboratory network and reintegrated into the system (1) after calibration.

12. Method as per Claim 11,
where the ACTUAL sensor-specific data saved in the data memory of the secondary plug connector element (4.1...4.n) are recorded in a company's internal database and compared with saved SET data.

13. Method as per Claim 12,
where an error message is issued if the values deviate beyond a predefined tolerance range.

14. Method as per Claim 13,
where - in the event of an error message - a new sensor is ordered via a corresponding API interface of the virtual transmitter (VM) using an SAP connection.

## Revendications

1. Système destiné à l'automatisation de process avec un grand nombre de capteurs intelligents (2.1 ... 2.n), pour lequel chaque capteur (2.1 ... 2.n) sert à la détermination ou la surveillance d'une grandeur de process physique ou chimique d'un produit (6) et qui présente respectivement un élément de connexion (3.1 ... 3.n) côté primaire et un élément de connexion (4.1 ... 4.n) côté secondaire avec un élément capteur, l'alimentation en énergie et la communication de données entre les deux éléments de connexion (3.1 ... 3.n ; 4.1 ... 4.n) s'effectuant par le biais d'un connecteur femelle amovible (7.1 ... 7.n), une interface de service Web (8.1 ... 8.n) étant affectée à chaque capteur (2.1 ... 2.n), interface par l'intermédiaire de laquelle le capteur (2.1 ... 2.n) peut être raccordé à un réseau d'utilisateurs à grande distance (WAN) ou à un réseau d'utilisateurs local (LAN),
pour lequel est prévu une unité de contrôle (10) ou un serveur, qui met à disposition au moins un logiciel pour la création d'un transmetteur virtuel (VM), et pour lequel la communication entre le transmetteur virtuel (VM) et les capteurs (2.1 ... 2.n) intervient par le biais de l'interface de service Web (8.1 ... 8.n).

2. Système selon la revendication 1,
pour lequel l'interface de service Web (8.1 ... 8.n) est intégrée dans l'élément de connexion (3.1 ... 3.n) côté primaire.

3. Système selon la revendication 1 ou 2,
pour lequel l'interface de service Web (8.1 ... 8.n) sur l'élément de connexion (3.1 ... 3.n) côté primaire peut être adressée automatiquement, de façon univoque, par le biais d'une adresse Web (IP) correspondante.

4. Système selon la revendication 1,
pour lequel il s'agit, concernant l'unité de contrôle (10), par exemple d'un PC (10a), d'un terminal de poche (13a), d'un téléphone intelligent (13b) avec navigateur Internet ou via un téléphone à l'aide d'un serveur.

5. Système selon la revendication 1,
pour lequel il s'agit, concernant les capteurs (2.1 ... 2.n), de capteurs électrochimiques.

6. Système selon la revendication 1,
pour lequel il s'agit, concernant le connecteur femelle (7.1 ... 7.n), d'une interface galvanique ou galvaniquement séparée, notamment une interface inductive.

7. Système selon la revendication 1,
pour lequel est prévue dans chaque élément de connexion (4.1 ... 4.n) une mémoire de données (14.1 ... 14.n), laquelle contient des données spécifiques au capteur, notamment des données d'identification, de paramétrage ou d'étalonnage et, le cas échéant, les données mesurées en dernier.

8. Système selon la revendication 1 ou 3,
pour lequel il s'agit, concernant l'interface de service Web (8.1 ... 8.n), d'une interface série en vue du raccordement au réseau d'utilisateurs à grande distance (WAN) ou au réseau d'utilisateurs local (LAN).

9. Système selon l'une ou plusieurs des revendications précédentes,
pour lequel est prévue une unité d'entrée (11), par l'intermédiaire de laquelle un utilisateur peut accéder directement au transmetteur virtuel (VM).

10. Système selon l'une ou plusieurs des revendications précédentes,
pour lequel il s'agit, concernant l'unité d'entrée (11), d'un serveur Web, lequel peut être adressé par l'intermédiaire d'un serveur Web.

11. Procédé destiné à l'étalonnage des capteurs d'un système (1) selon l'une ou plusieurs des revendications précédentes 1-10,
pour lequel un ou plusieurs capteurs (2.1 ... 2.n) sont prélevés à des fins de maintenance et d'étalonnage à partir d'un système (1) relié par l'intermédiaire d'un premier réseau (LAN) et reliés dans le laboratoire avec un réseau de laboratoire (LAN),
le capteur (2.1 ... 2.n) correspondant étant à chaque fois adressé par le biais de l'adresse Web (IP) et une comparaison automatique des données d'étalonnage du capteur (2.1 ... 2.n) étant effectuée avec les données mémorisées dans le transmetteur virtuel (VM),
les capteurs (2.1 ... 2.n) étant étalonnés par l'utilisateur par l'intermédiaire de l'interface de service Web (8.1 ... 8.n), et
les capteurs (2.1 ... 2.n) étalonnés étant prélevés du réseau de laboratoire et, une fois l'étalonnage réalisé, réintégrés dans le système (1).

12. Système selon la revendication 11,
pour lequel les données réelles spécifiques au capteur, enregistrées dans la mémoire de données de l'élément de connexion (4.1 ... 4.n) côté secondaire sont saisies dans une base de données interne à l'entreprise et comparées avec les données de consigne mémorisées.

13. Système selon la revendication 12,
pour lequel un message d'erreur est délivré en cas d'écart allant au-delà d'une zone de tolérance prédéfinie.

14. Système selon la revendication 13,
pour lequel en cas de message d'erreur, un nouveau capteur est commandé au moyen d'une liaison SAP par le biais d'une interface API appropriée du transmetteur virtuel (VM).
